# EUROPEAN PATENT APPLICATION

(11) **EP 4 624 441 A1**
(43) Date of publication of application: **01.10.2025**
(21) Application number: 24305456.6
(22) Date of filing: 26.03.2024
(51) Int. Cl.: C04B 38/08, C04B 28/04

(54) **PERVIOUS CONCRETE COMPOSITION FOR PURIFYING ATMOSPHERIC AIR**

(71) Applicant: Holcim Technology Ltd, 6300 Zug (CH)
(72) Inventor: JAVIERRE, Isabelle, 38070 SAINT QUENTIN FALLAVIER (FR); DUBOIS-BRUGGER, Isabelle, 38070 SAINT QUENTIN FALLAVIER (FR)
(74) Representative: Regimbeau

(57) **Abstract**

The invention relates to a pervious concrete based on:
• a cement,
• a particulate pyrogenic carbonaceous material obtained from biomass pyrolysis, said pyrogenic carbonaceous material having a specific surface area ranging from 300 to 1000 m²/g, and
• aggregates,
said pervious concrete having an porosity of at least 10%, preferably ranging from 10% to 50%, expressed as a percentage with respect to the volume of the final hardened concrete.

The invention further relates to the use of the pervious concrete of the invention for removing, at least in part, from the atmosphere gases and volatile compounds including nitrogen oxides, and preferably NOₓ, sulfur oxides, volatile organic compounds, ozone, carbon monoxide.

The invention also relates to a method for preparing the pervious concrete of the invention.

## Description

### FIELD OF THE INVENTION

The invention relates to a concrete-based element useful for removing gases and volatile compounds from the atmosphere, in particular nitrogen oxides, sulphur oxides, ozone, carbon monoxide and volatile organic compounds.

### BACKGROUND OF THE INVENTION

World Health Organization (WHO) Global Air Quality guidelines are regularly reviewed and emitted to encourage city public entities to take actions to improve urban areas air quality. These reports review the "acceptable" concentrations of air pollutants such as nitrogen oxides, also called NOₓ, which is a combustion product of (fossil) fuel, especially in thermal engines (exhaust fumes from motor vehicles, boilers, etc.). Other air pollutants are sulphur oxides, ozone, carbon monoxide and volatile organic compounds (VOC).

The last 2021 Global Air Quality guidelines assigned new concentration limits for air ambient pollutants. For instance, the annual authorized NO₂ mean concentration dropped from 45 µg/m³ in the 2005 WHO report to 10 µg/m³ in the 2021 WHO report. Most cities worldwide are above these limits.

Photocatalytic technology within concrete matrix is widely plebiscite to overcome urban NOₓ pollutants. However, such technologies rely on the functionalization of concrete with expensive, nonrenewable, nanosized photocatalytic oxides additives.

Adsorption technology within concrete is also reported in literature, even though less frequently. An example of adsorbent concrete is described in WO 2011/045509, using activated carbon as the adsorbent. The resulting concrete compositions thus passively adsorbs air pollutants when used as construction material. However, the production of traditional activated carbon is commonly based on coal, lignite, peat, petroleum residues feedstocks, in other words expensive and non-renewable resources. They are produced by calcination / pyrolysis under limited air/oxygen gases usually requiring high temperatures ranging from 800°C to 1100°C.

There is thus a need for novel concrete compositions suitable as construction material and able to absorb at least in part air pollutants such as nitrogen oxides, sulphur oxides, ozone and volatile organic compounds, with improved performances and a reduced carbon footprint.

### SUMMARY OF THE INVENTION

Surprisingly, it was found that pyrogenic carbonaceous material such as biochar offers not only equally effective but improved NOₓ mitigation performance at half the specific surface compared to activated carbon. Even more surprisingly it was found that when used at same addition rate biochar offers increased NOₓ absorption compared to activated carbon, even when used on concrete with higher porosity. In other words, the use of a pyrogenic carbonaceous material in a pervious concrete increases NOₓ absorption to a much higher extent than activated carbon.

In a first aspect, the invention thus relates to a pervious concrete based on:
- a cement,
- a particulate pyrogenic carbonaceous material obtained from biomass pyrolysis, said pyrogenic carbonaceous material having a specific surface area ranging from 300 to 1000 m²/g, and
- aggregates,
said pervious concrete having an porosity of at least 10%, preferably ranging from 10% to 50%, expressed as a percentage with respect to the volume of the final hardened concrete.

Advantageously:
- the pyrogenic carbonaceous material is in the form of particles having and a D₉₀ of 150 µm or less, and advantageously a D₅₀ of 25 µm or less, and/or
- the pyrogenic carbonaceous material is a biochar obtained from pyrolysis of a biomass at a temperature of between 350°C and 750°C, and/or
- the pyrogenic carbonaceous material has a nitrogen content of 6 wt% or below, relative to the total mass of the pyrogenic carbonaceous material, and/or
- the pyrogenic carbonaceous material content ranges from 0.1 to 5 wt%, relative to the total weight of the cement, and/or
- the weight ratio of pyrogenic carbonaceous material to cement ranges from 0.8 to 2.0 %, preferably from 1.0 to 1.8%, and/or
   the cement is selected from CEM I, CEM II, CEM III or CEM IV, and/or
- the pervious concrete has an porosity ranging from 15% to 40%, preferably ranging from 20% to 35%, expressed as a percentage with respect to the volume of the final hardened concrete.

In another aspect, the invention further relates to a use of the pervious concrete of the invention for removing, at least in part, from the atmosphere gases and volatile compounds including nitrogen oxides, and preferably NOₓ, sulfur oxides, volatile organic compounds, ozone, carbon monoxide. Preferably, the pervious concrete is then used as a construction material.

In another aspect, the invention further relates to a method for preparing the pervious concrete of the invention, comprising mixing cement, pyrogenic carbonaceous material and aggregates with water and compacting the resulting composition. Typically, the water to cement ratio ranges from 0.25 to 0.50, preferably from 0.30 to 0.40.

### DEFINITIONS

**Biochar:** As used herein, the term "biochar" designates a solid porous carbonaceous material which is produced by thermal decomposition of biomass.

Biochar is obtained by the thermal decomposition of biomass at a temperature ranging from 350 to 1200°C, preferably from 350 to 800°C, more preferably from 400 to 750°C and even more preferably from 450°C to 700°C. Advantageously, the heat treatment is a pyrolysis carried out at a temperature of above 550°C, and advantageously below 750°C or 700°C. The pyrolysis is typically performed in an oxygen- reduced atmosphere. Oxygen-reduced atmosphere is understood as an atmosphere with oxygen content below 21%. Advantageously, pyrolysis is performed in an oxygen reduced atmosphere with less than 10% oxygen in the atmosphere.

**Biomass:** As used herein, the term "biomass" designates biological mass that can be used as a renewable energy source. It refers to any type of biomass, preferably comprising or consisting of a biomass of the solid type, and in particular a biomass of the lignocellulosic type. Non-limitative examples of types of biomass include:
- wood-based biomass, for example wood waste such as recycled crushed wood from demolition or furniture,
- residues from agricultural operations (in particular straw, maize cobs), residues from forestry operations,
- products from forestry operations,
- residues from sawmills and
- dedicated crops, for example short rotation coppice, or
- residues from microalgaes.

Preferably, biomass feedstock is a non-woody biomass, including but not limited to agricultural residues including peat, a solid formed due to the accumulation of partially degraded biomass and contains highly varying fractions of ash-forming elements.

**NOₓ:** As used herein, "NOₓ" is shorthand for nitric oxide (NO) and nitrogen dioxide (NO₂), the nitrogen oxides that are most relevant for air pollution. These gases contribute to the formation of smog and acid rain, as well as affecting tropospheric ozone.

**Concrete:** As used herein, the term "concrete" refers to a composition based on hydraulic binder, aggregates, water, and admixtures which sets and hardens by means of hydration reactions and processes and which, after hardening, retains its strength and stability even under water. Specifically, concrete is as defined in the standard NF EN 206+A1:2016.

**Pervious Concrete:** As used herein, a "pervious concrete" - also called "draining concrete" - is a concrete whose porosity, or volume of voids, is high enough and interconnected for water to flow through the void network. A pervious concrete generally has less fine aggregates and cement paste than conventional concrete. A pervious concrete element is generally prepared by mixing aggregates with a cement paste, filling a formwork or mold with the mixture and applying pressure to the upper surface of the concrete element to obtain a suitable filling of the formwork or mold as well as a flat top surface. The application of pressure to pervious concrete is generally referred to as concrete compaction and can be done manually or mechanically, for example by means of a shovel, roller, paver, etc. Pervious concretes are generally formulated so as to be only slightly compressible or even uncompressible, so as to preserve its high porosity even after compaction.

The person of skill in the art is familiar with pervious concrete formulations and processes for preparing same, as described for instance in WO2012/001292 or WO2024/018075.

**Hydraulic Binder:** A hydraulic binder is a material which sets and hardens by hydration. Exemplary hydraulic binders are cements, or compositions comprising cement.

**Cement:** The cement comprises Portland clinker and a source of calcium sulfate.

The cement is preferably as defined in the standard NF-EN-197-1 of April 2012, or in the standard NF EN 197-5 published in May 2021. The cements defined in these standards are grouped in 6 different families: CEM I, CEM II, CEM III, CEM IV, CEM V and CEM VI. The cement can also be a CEM I, CEM II, CEM III, CEM IV, CEM V or a CEM VI to which mineral components are further added in a second preparation step.

The cement may be any mineral binder that comprises Portland clinker optionally mixed with one or several mineral components as defined below.

The cement may optionally further contain a calcium aluminate cement or a calcium sulfoaluminate cement, typically 10 wt.-% or less of a calcium aluminate cement or a calcium sulfoaluminate cement, if shorter setting times and higher early age strength development are for example required.

**Calcium sulphate:** Calcium sulphate used according to the present invention includes gypsum (calcium sulphate dihydrate, CaSO₄.2H₂O), hemi-hydrate (CaSO₄.1/2H₂O), anhydrite (anhydrous calcium sulphate, CaSOt) or a mixture thereof. Calcium sulphate produced as a by-product of certain industrial processes may also be used. Preferably, the calcium sulphate content ranges from 0% to 5% by weight of the cement.

**Mineral component:** the mineral component may designate slag (for example, as defined in the European NF EN 197-1 Standard of April 2012, paragraph 5.2.2), pozzolanic materials (for example as defined in the European NF EN 197-1 Standard of April 2012, paragraph 5.2.3), fly ash (for example, as described in the European NF EN 197-1 Standard of April 2012, paragraph 5.2.4), calcined schists (for example, as described in the European NF EN 197-1 Standard of April 2012, paragraph 5.2.5), material containing calcium carbonate, for example limestone (for example, as defined in the European NF EN 197-1 Standard paragraph 5.2.6), limestone components (for example, as defined in the "Concrete" NF P 18-508 Standard), silica fume (for example, as defined in the European NF EN 197-1 Standard of April 2012, paragraph 5.2.7), siliceous components (for example, as defined in the "Concrete" NF P 18-509 Standard), metakaolin or mixtures thereof. The mineral component may also be ground construction demolition waste.

Examples of siliceous components are ground glass, solid or hollow glass beads, glass granules, expanded glass powder.

**Admixture:** As used herein, the term "admixture" refers to a material other than water, aggregates, cement, mineral component and pyrogenic carbonaceous material, that is used as an ingredient of concrete composition to modify its freshly mixed, setting, or hardened properties, and that is added to the concrete composition before or during its mixing with water. The terms "admixture" and "chemical admixture" will have the same meaning in the present disclosure.

**Superpasticizer:** As used herein, the term "superplasticizer" is to be understood as an admixture including both water reducing agents and superplasticizers as described in the book entitled "Concrete Admixtures Handbook, Properties Science and Technology", V.S. Ramachandran, Noyes Publications, 1984.

A water reducing agent is defined as an admixture which typically reduces the amount of mixing water by 10 to 15% for a given workability. The water reducing agents include, for example lignosulfonates, hydroxycarboxylic acids, carbohydrates and other specialized organic compounds, e.g. glycerol, polyvinyl alcohol, sodium alumino-methyl-siliconate, sulfanilic acid and casein.

The superplasticizers belong to a new class of water reducing agents, chemically different from normal water reducing agents and capable of reducing the amounts of water by about 30%. Super-plasticizers have been globally classified in four groups: sulfonated condensates of naphthalene formaldehyde (SNF) (generally a sodium salt); sulfonate condensates of melamine formaldehyde (SMF); modified lignosulfonates (MLS); and others. More recent super-plasticizers include polycarboxylic compounds such as polycarboxylates, e.g. polyacrylates. A super-plasticizer is preferably a new generation super-plasticizer, e.g. a copolymer containing a polyethylene glycol as a grafted chain and carboxylic functions in the main chain like a polycarboxylic ether. Sodium polycarboxylates-polysulfonates and sodium polyacrylates may also be used. The derivatives of phosphonic acid may also be used. The required amount of super-plasticizer generally depends on the reactivity of the cement. The lower the reactivity, the smaller is the required amount of super-plasticizer. In order to reduce the total amount of alkaline salts, the super-plasticizer may be used as a calcium salt rather than as a sodium salt.

**D50**, **D90, D97**: The DX, where X stand for example for 50 or for 90 or for 97, is the Xth percentile of the size distribution of the particles, by volume; that is, X% of the particles have a size that is less than or equal to D97 and (100-X)% of the particles have a size that is greater than DX.

Particle size distributions and particle sizes less than about 200µm are measured using a Malvern MS2000 laser granulometer.

**Based on:** The expression "based on" should be understood in the present application to refer to a composition comprising the product of the reaction of the various constituents, the hydraulic binder being intended to react with water during the hydration and hardening steps.

### DETAILED DESCRIPTION OF EMBODIMENTS OF THE INVENTION

### 1. Pervious Concrete

The invention relates to pervious concrete based on:
- A hydraulic binder,
- A particulate pyrogenic carbonaceous material obtained from biomass pyrolysis, said pyrogenic carbonaceous material having a specific surface area ranging from 300 to1000 m²/g, and
- Aggregates,
said pervious concrete having an porosity of at least 10%, preferably from 10% to 50%, expressed as a percentage with respect to the volume of the final hardened concrete.

### Pyrogenic carbonaceous material

Pyrogenic carbonaceous materials are known to have a reduced carbon footprint (CO₂) as compared with activated carbon, such as explained for instance in WO2023/227630. The pyrogenic carbonaceous material is advantageously in the form of particles having a D₉₀ of 300 µm or less, advantageously a D₉₀ ranging from 5 to 200 µm, more advantageously from 5 to 150. The pyrogenic carbonaceous material is advantageously in the form of particles having a D₅₀ of 50 µm or less, advantageously a D₅₀ ranging from 2 to 25 µm.

The pyrogenic carbonaceous material has preferably a specific surface area ranging from 300 to1000 m²/g, advantageously from 350 to 800 m²/g, preferably from 380 to 600 m²/g and even more preferably from 400 to 500 m²/g. The specific surface area is typically measured by the BET method.

The pyrogenic carbonaceous material is preferably biochar.

Biochars gather different organic carbon forms - thanks to the pyrolysis treatment - and may further be enriched in oxygen (O), phosphorous (P), metals such as calcium (Ca) or manganese (Mg) and sometimes nitrogen (N). Advantageously, the pyrogenic carbonaceous material has a nitrogen content of 6 wt% or below, relative to the total mass of the pyrogenic carbonaceous material.

Advantageously, the pyrogenic carbonaceous material content in the pervious concrete ranges from 0.1 wt.-% to 5 wt.-%, preferably from 0.8 wt.-% to 3.0 wt.-%, preferably from 1.0 wt.-% to 2 wt.-%, relative to the total weight of the cement. Also, the weight/weight ratio of pyrogenic carbonaceous material to cement preferably ranges from 0.1 to 5 %, more preferably from 0.8 to 2.0 %, even more preferably from 1.0 to 1.8%.

### Hydraulic binder

The hydraulic binder comprises cement. The cement has the definition provided above. The cement as used in the invention may be any type of cement comprising Portland clinker. Advantageously, the cement used in the invention is selected from the cements readily available on the market.

As mentioned above, the cement may comprise mineral components as defined above. All mineral additions listed in the Portland cement standards EN 197-1 of April 2012, are suitable. Granulated blast furnace slags are particularly advantageous.

The mineral components are preferably in the form of particles having a D90 less than or equal to 200 µm, and more preferably a D97 less than or equal to 200 µm.

Preferably, cement is selected from CEM I or CEM III, as defined in the standard EN197-1 of April 2012.

### Admixtures

The pervious concrete may also comprise an admixture, for example one of those described in the EN 934-2 standards as of September 2002, EN 934-3 standard as of November 2009 or EN 934-4 as of August 2009.

Admixtures for pervious concrete are known and are for example described in WO2012/001292.

Admixtures are in particular selected from plasticizer, superplasticizer, defoamers (see WO2012/001292 page 6 lines 13-23), anti-efflorescence agents (see WO2012/001292 page 6 lines 24 to page 7 line 4), viscosity modifying agents (see WO2012/001292 page 7 lines 5-14), activating agents, accelerators and/or retarders (see WO2012/001292 page 7 lines 15-21), and combinations thereof.

In particular, the concrete comprises from 0.05% by weight to 2% by weight of admixtures selected from the group consisting of plasticizer, superplasticizer and mixtures thereof, relative to the total weight of cement.

It should be noted that the admixture may be added to the cement, to the hydraulic binder, or to the water when preparing a concrete composition.

Advantageously, the pervious concrete and hydraulic binder are essentially free of photocatalytic agents. The expression "photocatalytic agent" is to be understood as any material suited to accelerate a chemical reaction under the action of light, for example, photocatalytic titanium dioxide.

As used herein, a material or composition is "essentially free of" a particular component when the component is present in a very low content, usually 5% by weight or less, compared to the total weight of the material, more especially below 1% by weight. For instance, a concrete is essentially free of photocatalytic agent when photocatalytic agent is typically present in the cement in an amount of less than 1 wt% or preferably 0.1 wt% of the total weight of cement. Even more preferably, no photocatalytic agent is present in the concrete.

### Aggregates

Any known aggregates suitable for the preparation of pervious concrete may be used for the present invention.

The diameter of the aggregates advantageously ranges from 2 mm to 14 mm, preferably from 2 mm or from 4 mm to 10 mm, more preferably from 2 mm or from 4 mm to 6 mm. Preferably, when aggregates having a diameter ranging from 0.063 mm to 2.0 mm are present, their content is less than 10% by volume compared to the total volume of aggregates.

### Pervious Concrete

The pervious concrete advantageously comprises:
- at least 10% of the hydraulic binder comprising the particulate pyrogenic carbonaceous material, both as described above; and
- up to 90 % of aggregates,
the percentages corresponding to volume proportions relative to the total volume in the dried (hardened) state.

Advantageously, the fresh composition for pervious concrete comprises, by kg per cubic meter:
- from 150 to 400 kg/m³, preferably from 200 to 350 kg/m³, more preferably from 250 to 300 kg/m³, of cement;
- from 0.25 to 5.0 kg/m³, preferably from 0.5 to 2.5 kg/m³, of admixture, preferably of superplasticizer; from 1350 to 1600 kg/m³, preferably from 1400 to 1550 kg/m³, more preferably from 1450 to 1520 kg/m³, of aggregates, preferably of aggregate having a diameter ranging from 2 mm to 6 mm or from 4 mm to 6 mm;
- from 50 to 170 kg/m³, preferably from 70 to 130 kg/m³, more preferably from 90 to 110 kg/m³, of water;
- the composition further comprising from 0.2 wt.-% to 5 wt.-%, preferably from 0.8 wt.-% to 2.0 wt.-%, preferably from 1.0 wt.-% to 1.8 wt.-%, relative to the total weight of the cement, of pyrogenic carbonaceous material as described above, preferably of biochar as described above.

The water to cement ratio preferably ranges from 0.25 to 0.50, preferentially from 0.30 to 0.40.

Preferably, the porosity of the pervious concrete in the dried (hardened) state ranges from 10% to 50%, preferably from 15% to 40%, more preferably from 20% to 35%, expressed as a percentage with respect to the volume of the final hardened concrete.

Typically, the compressive strength of the pervious concrete after 28 days ranges from 5 to 20 MPa.

### 2. Preparation of the pervious concrete

Pervious concretes and method to prepare same are known in the art.

The invention relates to a method for preparing the pervious concrete of the invention, comprising mixing cement, pyrogenic carbonaceous material, admixtures, aggregates with water. Advantageously, the water to cement ratio ranges from 0.25 to 0.50, preferentially from 0.30 to 0.40.

In some embodiments, the hydraulic binder is prepared during a first step wherein the cement, the pyrogenic carbonaceous material and optionally chemical admixtures are mixed. The concrete may be prepared in a subsequent step wherein the aggregates and water are added.

In some embodiments, a premix composition for concrete is prepared during a first step wherein the cement, the pyrogenic carbonaceous, optionally chemical admixtures and aggregates are mixed. The concrete or mortar composition may be prepared in a subsequent step wherein water is added to the premix composition.

In this variant, the hydraulic binder is mixed with aggregates and the resulting mix may be later mixed with water. The resulting premix composition for concrete is a dry ready-mix concrete, usable by simply mixing with water.

In all embodiments, chemical admixtures may be added during the first step if they are in a dried state or supported on inorganic particles. Liquid chemical admixtures can be added during the subsequent step.

In all embodiments, the mixing is done using a conventional mixer at a concrete mixing plant or directly in a drum-truck mixer, for a mixing time usual in the field.

Advantageously, after mixing the composition is placed, in particular poured into a mold or formwork, and compacted. The placing and compacting steps are advantageously carried out at least partly simultaneously. The concrete can be compacted using any type of tool, such as a screed or roller.

### 3. Use of the pervious concrete and method for removing NOₓ from the atmosphere

In another aspect, the invention relates to a use of the pervious concrete of the invention for removing (at least in part) from the atmosphere gases and volatile compounds including carbon monoxide, nitrogen oxides, preferably NOₓ, sulfur oxides, volatile organic compounds and ozone, more preferably NOₓ, even more preferably NO₂.

Preferably, the pervious concrete is then used as a construction material. Exemplary uses include but are not limited to the use as construction materials with limited load bearing capacity including building interior or exterior facades and elements, precast elements to be used as depolluting walls or pavement e.g. bicycle or pedestrian pavements.

The invention makes it possible to respond to the need to withdraw NOₓ from the atmosphere.

The invention also relates to a method for depolluting the atmosphere (at least in part), or for withdrawing NOₓ from the atmosphere (at least in part), comprising trapping, in particular absorbing, atmosphere gases and volatile compounds including nitrogen oxides, and preferably NOₓ, carbon monoxide, sulfur oxides, volatile organic compounds and ozone, more preferably NOₓ, even more preferably NO₂, in a building or construction comprising the pervious concrete of the invention.

The invention further relates to a method for depolluting the atmosphere (at least in part), or for withdrawing carbon monoxide and NOₓ from the atmosphere (at least in part) in a zone to be depolluted, comprising manufacturing a building or a construction located in the zone to be depolluted with the pervious concrete of the invention.

The invention is also directed to the use of particulate pyrogenic carbonaceous material obtained from biomass pyrolysis, said pyrogenic carbonaceous material having a specific surface area ranging from 300 to1000 m²/g, as defined above, to withdraw gases and volatile compounds including nitrogen oxides, and preferably carbon monoxide, NOₓ, sulfur oxides, volatile organic compounds and ozone, more preferably NOₓ, even more preferably NO₂, from the atmosphere, in a pervious concrete being based on:
- a hydraulic binder as described above,
- particulate pyrogenic carbonaceous material as described above,
- aggregates,
- water.

### METHODS

### Measurement of the particle size distribution

In the present description and accompanying claims, the particle size distribution is measured by laser particle size analysis, e.g. using a Malvern Mastersizer 3000 laser analyzer.

Measurement is performed in ethanol. The light source is a red He-Ne laser (632 nm) and blue diode (466 nm). The optical model is the Mie model and the computing matrix of polydisperse type. The apparatus is calibrated before each work session using a standard sample (C10 silica, Sibelco) with known particle size curve. Measurement is carried out with the following parameters: pump rate 2300 rpm and stirrer speed of 800 rpm. The sample is positioned to obtain 10 to 20 % obscuration. Measurement is conducted after stabilization of obscuration. 80 % sonication is emitted for 1 minute to ensure de-agglomeration of the sample. After about 30 seconds (to evacuate any air bubbles) the sample is measured for 15 seconds (15000 images analysed). Without emptying the cell, the measurement is repeated at least twice to verify the stability of the result and evacuation of any bubbles.

All the measurements given in the description and specified ranges correspond to the mean values obtained with ultrasound.

The particle size of sand is generally determined by screening.

### Measurement of the specific surface Area (BET)

The BET (Brunauer-Emmett-Teller) surface area analysis is a physical measurement of specific surface area and porous network through gas adsorption analysis. An inert gas, nitrogen, is continuously flowed over the sample with increasing pressure. Specifically, the specific surface area of the various powders - in particular of the pyrogenic carbonaceous material, such as biochar - is measured as follows.

### Preparation of the sample

A sample of powder (generally around 0.3 to 0.75 g) is used. A 9 cm³ cell is used. The measuring assembly (cell+glass rod) is weighed. Then the sample is added into the cell. The assembly (cell+glass rod+sample) is weighed. The measuring cell is placed on a degassing unit, and the sample is degassed. The pressure to be reached is 25 to 30 mTorr. The duration to reach this pressure depends on the nature of the sample, the quantity of matter and the number of cells on the degassing unit. The degassing step makes it possible to remove any adsorption (H₂O, CO, CO₂, etc.) from the surface of the sample. The mass of the sample is obtained by subtracting the mass of the cell from the mass of the cell+degassed sample.

### Measurement

The sample is then analyzed after placing it on the measurement unit. The analyzer is a 3 Flex, commercialized by the Micromeritics company. The measurement is based on the adsorption of nitrogen by the sample at a given temperature, in this case, the temperature of liquid nitrogen, that is -196° C. The apparatus measures the pressure of the reference cell in which the adsorbate is at its saturated vapour pressure and the pressure of the sample cell into which known volumes of adsorbate are injected. The resulting curve from these measurements is the adsorption isotherm. In the measurement process, it is necessary to know the dead volume of the cell: a measurement of this volume is therefore carried out with helium before the analysis. The mass of the sample calculated beforehand is entered as a parameter. The surface area is determined by the software by linear regression from the experimental curve.

### Method for Measuring the volume of the mesopores and micropores of a pyrogenic carbonaceous material, such as biochar

Mesopores are understood as pores having a diameter ranging from 2 to 50 nanometers. Micropores are understood as pores having a diameter of less than 2 nanometers. The volume of mesopores - Vₘₑₛₒ - as well as the volume of the micropores - V_{micro} - is determined from the nitrogen adsorption/desorption isotherms using the BET method described above. The pore size distribution (PSD) is calculated from adsorption isotherms by using the KJS (Kruk-Jaroniec-Sayari) method. The mesopores volume and micropore volumes are determined by integration of the PSD curves.

### Method for Measuring the Porosity of a Porous Concrete Element

The porosity measurement of concrete is carried out by using a cylindrical hardened concrete test specimen of 11 cm diameter and 22 cm height which is placed in a recipient of which the internal volume corresponded to the dimensions of the sample. The totality of the internal volume of the recipient is filled with water, the sample then being completely immersed in water. The porosity corresponds to the ratio between the volume of water added and the internal volume of the recipient. The porosity of a concrete is expressed by a percentage with respect to the volume of the final hardened concrete.

### Method for measuring the compressive strength (CS)

The concrete element of the invention is typically cast in a mold. The concrete is cured at 20°C and 100% relative humidity to give a cured absorbent mineral composition.

Whatever the time period, the compressive strength is measured on a cylindrical sample having a diameter of 11 cm and a height of 22 cm according to the standard EN 12390-3: 2001 "Testing hardened concrete-Part 3: Compressive strength of test specimens".

### Adsorption test method:

NOₓ gas adsorption tests were performed using a fused quartz reactor (3.8dm3). The gas was injected into the reactor via 5 holes to homogenize the flow pattern. The NO/NO2 concentration inlet (respectively 768µg/m3 NO and 478µg/m3 NO₂) and oulet streams were controlled with an automatic NOₓ gas analyser (AC32M from Environnement SA, France). The mixed two gases were injected via a nitrogen carrier, with controlled relative humidity (45%). The instantaneous percentage reduction in pollutant gas concentration is expressed as AEₚₒₗₗᵤₜₐₙₜ=[(C₀-Cₛₐₘₚₗₑ)/Cᵢₙₗₑₜ) *100], wherein: AEₚₒₗₗᵤₜₐₙₜ stands for "adsorption efficiency" for pollutant (NO or _{NO2}).

C₀ and Cₛₐₘₚₗₑ are the simultaneous concentrations of the pollutant, at the outlet of the bypass and of the reactor containing the solid sample, respectively.

Samples were exposed in the chamber over a period of 24 hours. The size of the samples is 15cm*15cm*5cm with only the top surface exposed to the pollutants stream (all other surfaces are blocked with sealer).

The performance can also be expressed as a percentage by summing/integrating the instantaneous mitigation value over twenty four hours.

### BRIEF DESCRIPTION OF THE FIGURES

**Figure 1****:** NO2 mitigation performance for concrete samples MD0-22%, MDA1-22% (activated carbon), MDB1-22% and MDB4-22% (biochar). The vertical axis corresponds to the [NO₂]/[NO₂]ᵢₙₗₑₜ, while the horizontal axis corresponds to the time (in h).
**Figure 2****:** NO2 mitigation performance for series 2 samples at 32-35% macroporosity (concrete samples MD0-32%, MDA2-32%, MDB1-32%, MDB2-32% and MDB3-32%). The vertical axis corresponds to the [NO₂]/[NO₂]ᵢₙₗₑₜ , while the horizontal axis corresponds to the time (in h).

### EXAMPLES

Examples set forth below are provided for illustrative and comparative purposes only, and should not be construed as limiting the invention in any way.

### Materials

The material used in the examples is as described in table 1 below.

**Table 1**

| | **Supplier** | **Product reference** | **Designation in the examples** |
|---|---|---|---|
| Gravel | Holcim Estaque | aggregate 2/6 | Gravel 1 |
| | Holcim Petite Craz | aggregate 4/6 | Gravel 2 |
| Cement | Holcim Saint Pierre La Cour | CEM I 52.5 | Cement 1 |
| | Holcim La Malle | CEM III/B La malle | Cement 2 |
| Plasticizer | Mapei | Mapecrete Drain P | Plasticizer 1 |
| | Bau Chemie | MC-Techniflow 464 | Plasticizer 2 |
| Activated carbon | Norit | SA2 | A 1 |
| | HOK^{®} Activated Lignite | HOK | A 2 |
| Biochar | Novocarbo | FC1C | B 1 |
| | | FB1C | B 2 |
| | | FO1B | B 3 |
| | Valbois | Valbois | B 4 |

Examples are based on pervious concrete, where coarse aggregates occupy most of the pervious concrete volume.

Limestone gravels in the range size of 2-6 mm or 4-6 mm were used as coarse aggregates. The mass ratio of coarse aggregate to the binder was fixed at 5:1. The water to cement ratio was 0.35.

The activated carbons are prepared from peat and steam activated (SA2, Norit) or from lignite heat activated in a rotary earth furnace (HOK Mahlaktiviert, HOK^{®} Activated Lignite).

The biochars are sourced from Valbois and Novocarbo (FC1C, FB1C, FO1B). Valbois biochar was received with 0-5mm size cuts range and was grinded to <100µm.

### Characterization of the activated carbons A1 and A2, and Biochars B1 to B4

The results are presented in the following table.

**Table 2: Characteristics of activated carbons A1 and A2, and biochars B1-B4. SSA BET stands for BET Specific Surface Area, V_{micro} stands for, and Vₘₑₛₒ stands for**

| | | **Origin** | **SSA_{BET} (m²/g)** | **V_{micro} (cm³/g)** | **Vₘₑₛₒ (cm³/g)** |
|---|---|---|---|---|---|
| **Activated Carbon** | **A 1** | peat | 756 | 0.3 | 0.42 |
| | **A 2** | lignite | 276 | 0.09 | 0.12 |
| **Biochar** | **B 1** | wood | 445 | 0.17 | 0.18 |
| | **B 2** | fruit peat | 414 | 0.16 | 0.18 |
| | **B 3** | coconut shell | 1160 | | |
| | **B 4** | wood | 406 | 0.16 | 0.18 |

**Table 3: particle size distribution (D10, D50, D90) of activated carbons A1and A2, and biochars B1-B4**

| | | **D10 (µm)** | **D50 (µm)** | **D90 (µm)** |
|---|---|---|---|---|
| **Activated Carbon** | **A 1** | 2.25 | 33.58 | 180.86 |
| | **A 2** | 5.1 | 33.7 | 85.6 |
| **Biochar** | **B 1** | 2.08 | 4.17 | 0.15 |
| | **B 2** | 5.57 | 18.71 | 62.57 |
| | **B 3** | 4.63 | 23.58 | 81.05 |
| | **B 4** | 6.09 | 28.52 | 189.96 |

The activated carbons A1 and A2, as well as biochars B1-B4 have been chemically characterized. Table 6 summarizes chemistry percentages of carbon (C), hydrogen (H), oxygen (O), nitrogen (N).

**Table 4: Chemical composition. Contents are expressed in % w/w. Bulk density is measured according to standard EN 1097-6 : 2014.**

| | **Label** | **Product ref.** | **Carbon Content (%) w/w** | **Nitrogen Content (%) w/w** | **Sulfur Content (%) w/w** | **Oxygen Content (%) w/w** | **Bulk Density (kg/m³)** |
|---|---|---|---|---|---|---|---|
| Activated Carbon | **A1** | SA2 | 70.2 | 0.32 | 0.32 | 12.5 | 460 |
| | **A2** | HOK | 88.1 | 0.21 | 0.58 | 5.6 | 550 |
| Biochar | **B1** | FC1C | 91.8 | 0.6 | 0.05 | 2.8 | 543 |
| | **B2** | FB1C | 89.6 | 0.6 | 0.04 | 3.7 | 241 |
| | **B3** | FO1B | 92 | 6.4 | 0 | 2.8 | 394 |
| | **B4** | Valbois | 70 | 0.33 | 0.14 | 12.4 | 570 |

### Preparation of the pervious concretes

Dry materials (aggregates, cement, biochar/activated carbon addition and powder admixture) are weighted and introduced all together into a Rayneri mixer bowl.

Water is weighted in a separate vessel. Blending is started when the water is introduced into the bowl for two minutes and thirty seconds at low speed (v1).

Activated carbons were used as received and incorporated to the pervious concrete at the rate of 1.5% w/cement.

Biochars have been grinded to size <100µm.

The pervious concretes samples are compacted to obtain the targeted volume porosity.

Pervious concretes were prepared following using the compositions depicted in Tables 5 and 6. The final porosity of the pervious concretes obtained is also indicated in these tables.

Each concrete sample is labelled MDx-zz%, wherein x represents the type of activated carbon/biochar used (when x = 0, then no activated carbon or biochar is used -MD0 are reference examples with no pyrogenic carbonaceous materials), and zz represents the porosity of the pervious concrete.

A mechanical resistance in the order to 15 MPa is targeted in each case.

**Table 5: Serie 1 - prepared with CEM III cement (unless otherwise stated, quantities are indicated in kg/m³)**

| **Mix-design Label** | **MD0-22%** | **MDA1-22%** | **MDB1-22%** | **MDB4-22%** |
|---|---|---|---|---|
| **Gravel 2** | 1482 | 1476 | 1476 | 1476 |
| **Cement 2** | 280 | 280 | 280 | 280 |
| **W/C** | 0.35 | 0.35 | 0.35 | 0.35 |
| **Plasticizer 2** | 2 | 2 | 2 | 2 |
| **A 1 (1.5w%/cement)** | 0 | 4.2 | 0 | 0 |
| **B 1 (1.5w%/cement)** | 0 | 0 | 4.2 | 0 |
| **B 4 (1.5w%/cement)** | 0 | 0 | 0 | 4.2 |
| **Porosity** | 21% | 22% | 22% | 21% |
| **Compressive strength (28 days) MPa** | 18.3 | 12.1 | 18.5 | 19.1 |

**Table 6: Serie 2 - prepared with CEM I cement (unless otherwise stated, quantities are indicated in kg/m³)**

| **Mix-design Label** | **MD0-32 %** | **MDA2-32%** | **MDB1-32%** | **MDB2-32%** | **MDB3-32%** |
|---|---|---|---|---|---|
| **Gravel 1** | 1480 | 1480 | 1480 | 1480 | 1480 |
| **Cement 1** | 280 | 280 | 280 | 280 | 280 |
| **W/C** | 0.35 | 0.35 | 0.35 | 0.35 | 0.35 |
| **Plasticizer 1** | 0.75 | 0.75 | 0.75 | 0.75 | 0.75 |
| **A 2 (1.5w%/cement)** | 0 | 4.2 | 0 | 0 | 0 |
| **B 1 (1.5w%/cement)** | 0 | 0 | 4.2 | 0 | 0 |
| **B 2 (1.5w%/cement)** | 0 | 0 | 0 | 4.2 | 0 |
| **B 3 (1.5w%/cement)** | 0 | 0 | 0 | 0 | 4.2 |
| **Porosity (%)** | 32.3 | 33 | 30.7 | 35.5 | 32.3 |

### Results - NO₂ mitigation performance

The performance of pyrogenic carbonaceous material in concrete was investigated in two separate experiments. Example 1 presents the results for absorption efficacy when used in concrete with a porosity of 22%, and example 2 investigates the absorption efficacy in concrete with a porosity of 32-35%.

### Example 1: Comparison of Norit SA2 and Biochars FC1C (Novocarbo) & Valbois (Bordet) at 22% of porosity with CEM III cement

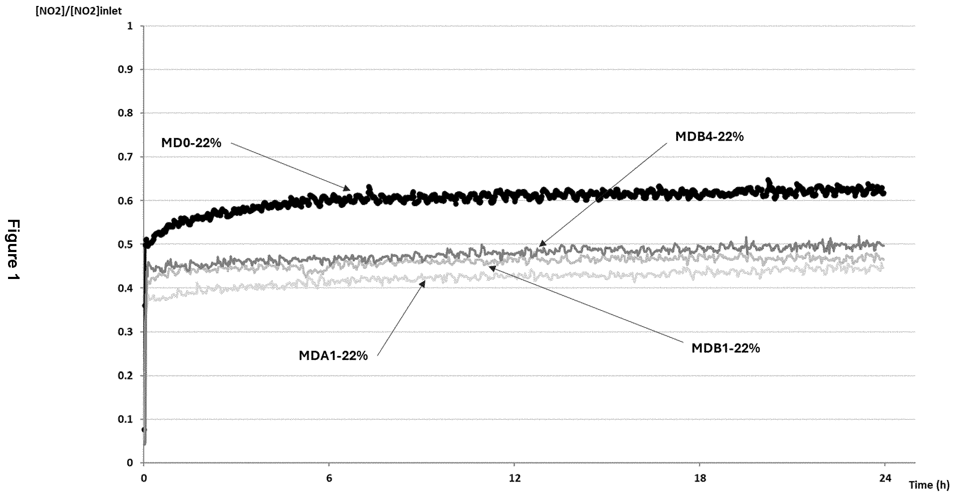

Figure 1 compares the NO₂ mitigation capacity for the samples from concrete samples of series 1.

NO₂ mitigation performances are described below in table 7.

**Table 7: NO₂ mitigation performance obtained for serie 1 (cement = CEM III). The value of 0 in Specific Surface Area for reference example MD0-22% is arbitrary.**

| | **MD0-22%** | **MDA1-22%** | **MDB1-22%** | **MDB4-22%** |
|---|---|---|---|---|
| **NO₂ mitigation performance (%)** | 38 | 57 | 55 | 54 |
| **Specific Surface (m²/g)** | 0 | 756 | 445 | 406 |

Concrete samples MDA1-22%, MDB1-22% and MDB4-22% are systematically more efficient than the reference with no addition (MDO-22% - empty circles).

Comparable performance for NO₂ mitigation is observed for pervious concrete samples MDA1-22%, MDB1-22% and MDB4-22%, while the specific surface of biochars B1 and B4 is nearly half of that of activated carbon A1.

### Example 2: NO₂ mitigation performance: Comparison of a family of Novocarbo biochars and lignite originated activated carbon (HOK) at 32%-35% of porosity with CEM I cement.

As explained above, the pervious concretes MD0-32%, MDA2-32%, MDB1-32%, MDB2-32% and MDB3-32% were prepared targeting a 32-35% volume macro-porosity.

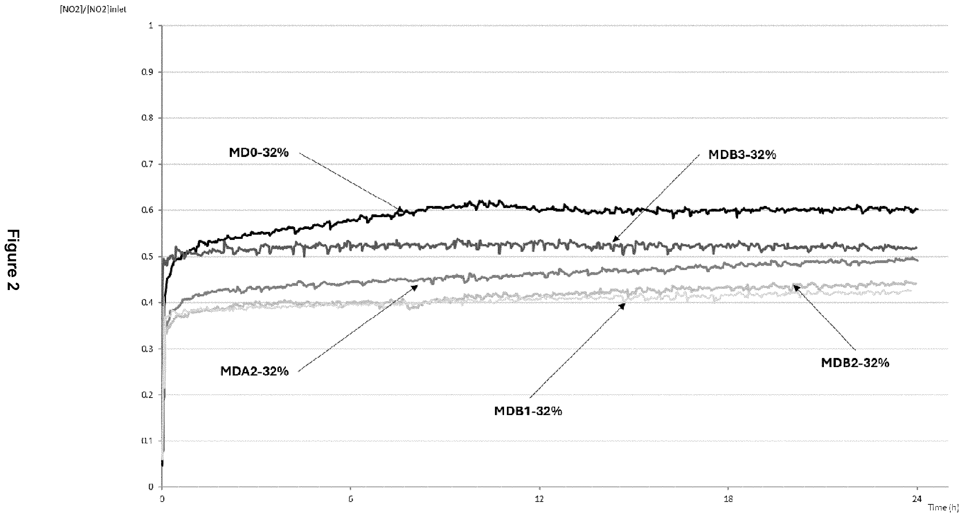

Figure 2 compares the NO₂ mitigation capacity for the samples from concrete samples of series 2.

NO₂ mitigation performances are described below in table 8.

**Table 8: NO₂ mitigation performance obtained for serie 2 (cement = CEM I). The value of 0 in Specific Surface Area for reference example MD0-22% is arbitrary.**

| | **MD0-32%** | **MDA2-32%** | **MDB1-32%** | **MDB2-32%** | **MDB3-32%** |
|---|---|---|---|---|---|
| **NO₂ mitigation performance (%)** | 41 | 54 | 59.6 | 61 | 45 |
| **Specific Surface (m²/g)** | 0 | 276 | 445 | 414 | 1160 |

MDA2-32%, MDB1-32%, MDB2-32% and MDB3-32% samples are systematically more efficient than reference example MDO-32% (upper curve with black round hollow markers).

Surprisingly, when the specific surface area of the biochar is above 1000 m²/g, the performances in NO₂ mitigation decrease (see results obtained with sample MDB3-32%).

### CONCLUSION

The results above demonstrate the efficacy of a pyrogenic carbonaceous material such as biochar for use as an additive in a pervious concrete for NO₂ mitigation.

The results in NO₂ mitigation are comparable to those obtained with of activated carbon at 22% concrete porosity and superior when used in concrete with porosity above 30%. This is a surprising finding considering that much lower surface area of biochar which was assumed to determine the absorption capacity.

## Claims

1. A pervious concrete based on:
• a cement,
• a particulate pyrogenic carbonaceous material obtained from biomass pyrolysis, said pyrogenic carbonaceous material having a specific surface area ranging from 300 to 1000 m²/g, and
• aggregates,
said pervious concrete having an porosity of at least 10%, preferably ranging from 10% to 50%, expressed as a percentage with respect to the volume of the final hardened concrete.

2. The pervious concrete of claim 1, wherein the pyrogenic carbonaceous material is in the form of particles having and a D₉₀ of 150 µm or less, and advantageously a D₅₀ of 25 µm or less.

3. The pervious concrete of claim 1 or 2, wherein the pyrogenic carbonaceous material is a biochar obtained from pyrolysis of a biomass at a temperature of between 350°C and 750°C in an oxygen-reduced atmosphere with less than 21% oxygen present in the atmosphere.

4. The pervious concrete of any of claims 1 to 3, wherein the pyrogenic carbonaceous material has a nitrogen content of 6 wt% or below, relative to the total mass of the pyrogenic carbonaceous material.

5. The pervious concrete of any of claims 1 to 4, wherein the pyrogenic carbonaceous material content ranges from 0.1 to 5 wt%, relative to the total weight of the cement.

6. The pervious concrete of any of claims 1 to 5, wherein the weight ratio of pyrogenic carbonaceous material to cement ranges from 0.8 to 2.0 %, preferably from 1.0 to 1.8%.

7. The pervious concrete material of any of claims 1 to 6, wherein the cement is selected from CEM I, CEM II, CEM III or CEM IV.

8. The pervious concrete material of any of claims 1 to 7, having an porosity ranging from 15% to 40%, preferably ranging from 20% to 35%, expressed as a percentage with respect to the volume of the final hardened concrete.

9. Use of the pervious concrete of any of claims 1 to 8 for removing, at least in part, from the atmosphere gases and volatile compounds including nitrogen oxides, and preferably NOₓ, sulfur oxides, volatile organic compounds, ozone, carbon monoxide.

10. The use of claim 9, wherein the pervious concrete is used as a construction material.

11. A method for preparing the pervious concrete of any of claims 1 to 8, comprising mixing cement, pyrogenic carbonaceous material and aggregates with water and compacting the resulting composition.

12. The method of claim 11, wherein the water to cement ratio ranges from 0.25 to 0.50, preferably from 0.30 to 0.40.
